# EUROPEAN PATENT SPECIFICATION

(11) **EP 3 114 920 B1**
(45) Date of publication and mention of the grant of the patent: **07.03.2018**
(21) Application number: 16176338.8
(22) Date of filing: 27.06.2016
(51) Int. Cl.: A01F 15/07

(54) **BALE FORMING AND WRAPPING APPARATUS AND METHOD WITH A WEB DETECTING SENSOR**
BALLENFORMUNGS- UND -UMWICKLUNGSVORRICHTUNG MIT GEFLECHTDETEKTIONSSENSOR UND VERFAHREN DAFÜR
APPAREIL D'EMBALLAGE ET DE FORMATION DE BALLES ET PROCÉDÉ À L'AIDE D'UN CAPTEUR DE DÉTECTION DE BANDE

(30) Priority: 09.07.2015 NL 2015127
(43) Date of publication of application: 11.01.2017
(73) Proprietor: Forage Innovations B.V., 3147 PB Maassluis (NL)
(72) Inventor: KEUNE, Tobias, 3147 PB Maassluis (NL)
(74) Representative: AGCO Intellectual Property Department

(56) References cited:
- EP-A1- 0 064 116
- WO-A1-2013/157948
- US-A1- 2010 288 140
- US-A1- 2012 240 527

## Description

### FIELD OF THE INVENTION

The invention refers to a bale forming and wrapping apparatus and method for forming and wrapping a bale from loose material and for monitoring that the bale is properly wrapped before ejecting it, in particular for forming a round-cylindrical bale from agricultural crop material.

### BACKGROUND OF THE INVENTION

WO 2013/157950 A1 and WO 2013/157949 A1 and WO 2013/157948 A1 disclose a continuous round baler 1 with a pivotal bale supporting construction 11, cf. Fig. 1. A bale forming means 10, e.g. one pressing belt, forms a round bale B in a drum-shaped bale forming chamber. While the bale B is formed in the bale forming chamber, the bale supporting construction 11 is in a bale receiving position, cf. Fig. 5. The bale B is pushed onto the bale supporting construction 11, cf. Fig. 6 and Fig. 7. The bale supporting construction 11 with the bale B is pivoted in a direction opposite to the travelling direction into a bale supporting position. The circumferential surface of the bale B on the bale supporting construction 11 being in the bale supporting position is wrapped. At the same time a new bale B' is formed in the bale forming chamber, cf. Fig. 9. The wrapped old bale B is ejected. For doing so the bale supporting construction 11 is pivoted into a bale ejecting position, cf. Fig. 10. Afterwards the bale supporting construction 11 is pivoted back into the bale receiving position, cf. Fig. 11.

After a round or cuboid baler has formed a bale, the entire bale or at least one bale surface must be wrapped before the bale is ejected. Otherwise the ejected bale would fall apart. Therefore a web of wrapping material is injected into a chamber containing the bale. The injected web is placed around the surface of the bale. The bale is ejected after the bale surface is wrapped.

It is desired to check whether or not the bale surface is actually wrapped. It is desired that a sensing device automatically performs this check. Several approaches how to do so have been made.

US 2004/0182043 A1 (also published as US 6966162 B2 and as EP 1461995 B1) discloses a round baler 10 which creates a round bale 16 in a baling chamber 12. The bale 16 in the baling chamber 12 is wrapped into a wrapping sheet 18 which is taken from a supply reel 28. The wrapping sheet 18 is injected into the baling chamber 12 through a wrapping sheet feed location.

In the embodiment of US 2004/0182043 A1 the baling chamber 12 is surrounded by a plurality of pressing rollers 20. Two wrapping sensors 42, 44 are positioned adjacent to the circumferential surface of the round-cylindrical bale 16. These two sensors 42 and 44 are positioned such that the feed location (inlet) 21 is between the two sensors 42 and 44. If the sheet 18 is properly taken by the rotated bale 16, the sheet 18 on the circumferential bale surface is first conveyed along the sensor 42 and afterwards conveyed along the sensor 44.

US 2004/0182043 A1 mentions several kinds of wrapping sensors, cf. par. [0029], e.g. optical sensors, mechanical sensors, distance sensors, ultrasound sensors, proximity sensors, light barriers, infrared sensors, or a combination of different sensor types. If one sensor 42 or 44 detects that no wrapping material is present on the bale circumferential surface, a signal is generated to a control unit ECU.

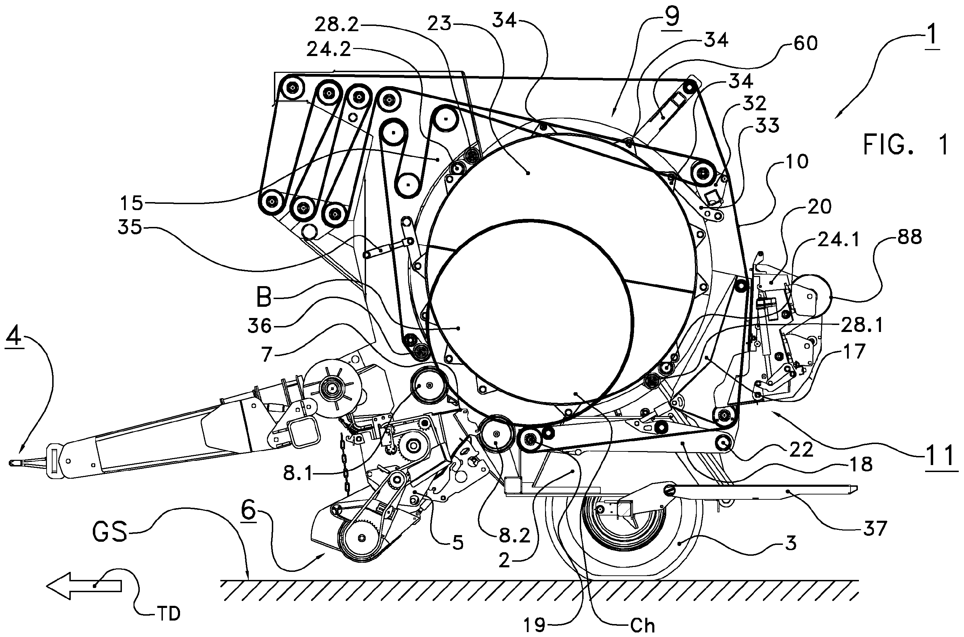

US 2010/0288140 A1 (also published as US 8434289 B2) shows a round baler 10 with an expandable bale forming chamber 9. The chamber 9 is defined and delimited by an apron 32 and three rollers 21, 22, 23 which are journalled between a pair of spaced arms 24, cf. Fig. 1. The bale forming chamber 9 is delimited by sidewalls 19 and a pivotal tailgate 14. During bale formation the tailgate 14 is in a closed position.

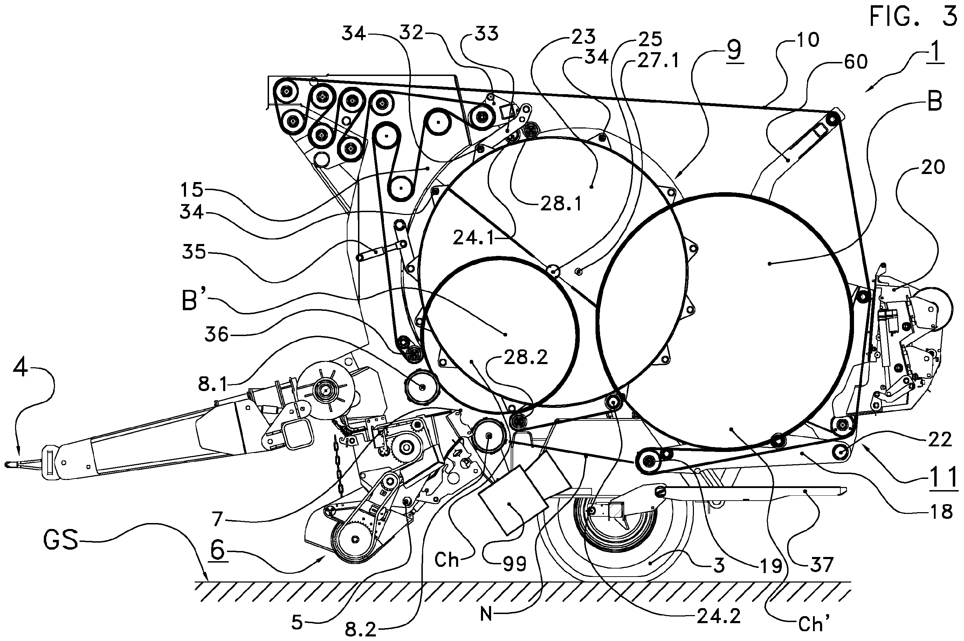

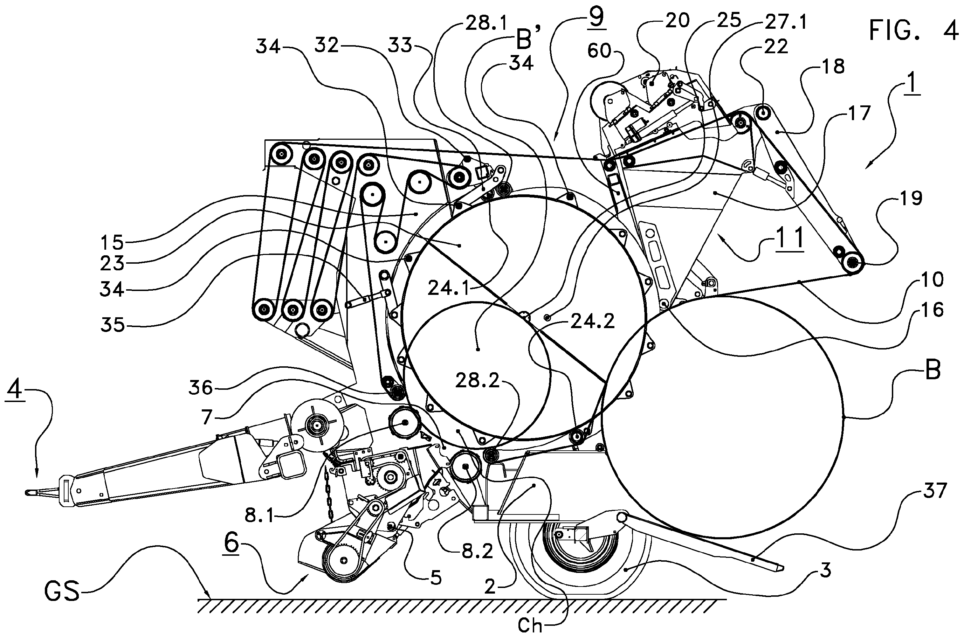

A net wrapping apparatus 29 of US 2010/0288140 A1 provides a web of wrapping material which is pulled from a supply roll 50. The web is inserted through the chamber 9 through a gap 55 between the two pressing rollers 22, 23, cf. Fig. 3. A sensor 82 is provided in the chamber 9 in areas adjacent to the rollers 21, 22 belonging to the sledge assembly 20. The emitter 84 is mounted on one arm 24 of the sledge assembly 20 and a detector 86 is mounted on the other arm, Fig. 6. The sensor 82 senses the entire width (length L) of the bale. If the bale 8 is not properly wrapped, loose crop material 90 protrudes from the idealized circumferential surface of the bale into a gap between two adjacent pressing rollers, cf. Fig. 4. The sensor 82 detects this undesired event. An alert at the bale is not properly wrapped is generated if the amount of light which reaches the detector 86 falls below a given threshold.

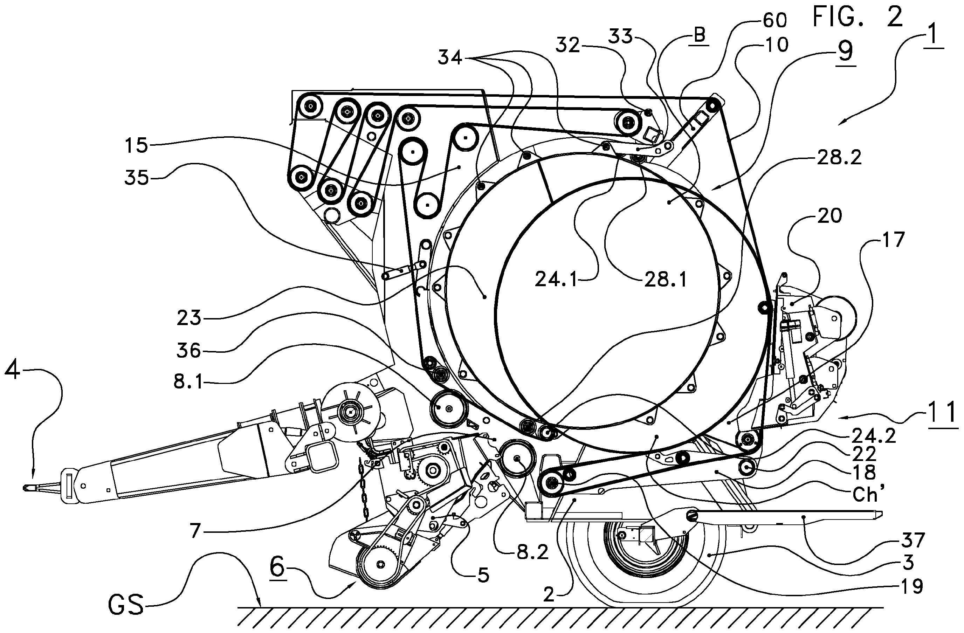

Fig. 1 of US 2012/0240527 A1 discloses a round baler 20 which forms and wraps a bale 16 in a baling chamber 36. A wrapping apparatus 10 provides wrap material 18 which is dispensed through a chamber inlet 80 into the baling chamber 36. A controller 2 receives signals from a wrap sensor 6, from a bale sensor 8, and from wrap dispenser 12, cf. Fig. 5. The sensor 6 is implemented as a wheel 6 which detects the payoff speed of the wrap material, Fig. 2.

US 2007/0021018 A1 discloses a specific kind of wrapping material. On the web of wrapping material 100 a reflective strip 1110 is mounted. An indicator section 850 is provided on the circumferential surface of a wrapped bale, cf. Fig. 8. The task solved by the wrapping material with the reflective strip 110 is that a bale can better be detected in the darkness.

### SUMMARY OF THE INVENTION

A problem solved by the invention is to provide a bale forming apparatus with the features of the preamble of claim 1 and a bale forming method with the features of the preamble of claim 10 wherein the risk of the undesired event is reduced that the discharge gate is moved into the bale ejecting position although the bale surface is not wrapped.

This problem is solved by a bale forming apparatus with the features of claim 1 and a bale forming method with the features of claim 10. Preferred embodiments are specified in the depending claims.

The bale forming apparatus according to the invention comprises
- a bale forming device,
- a casing,
- a web providing device, and
- a web detecting sensor.
   The casing comprises
- a moveable discharge gate and
- a further casing part.
   The moveable discharge gate can be moved with respect to the further casing part between
- a bale forming position,
- at least one bale wrapping position, and
- a bale ejecting position.

When the discharge gate is in the or one bale wrapping position, a gap between the further casing part and the discharge gate occurs. When the discharge gate is in the bale ejecting position, an aperture between the further casing part and the discharge gate occurs. The distance between the further casing part and the discharge gate being in the bale ejecting position is larger than the distance with the discharge gate being in the or one bale wrapping position. Therefore the aperture is larger than the or every gap.

The web detecting sensor can sense at least one segment of the bale surface to be wrapped while the bale is in the interior of the casing. The or every sensed surface segment is visible through the gap between the further casing part and the discharge gate being in the or one bale wrapping position.

The bale forming apparatus according to the invention operates as follows and the bale forming method according to the invention comprises the following steps:
- The bale forming device forms a bale in the interior of the casing. While the bale is formed, the discharge gate is in the bale forming position.
- The discharge gate is pivoted or otherwise moved away from the further casing part out of the bale forming position into the or one bale wrapping position such that the gap occurs.
- For wrapping a surface of the bale in the interior of the casing, the web providing device provides a web of wrapping material. This provided web is injected into the interior of the casing.
- The bale forming apparatus wraps a surface of the bale in the interior of the casing into the provided web. While the bale surface is wrapped, the discharge gate is in the or one at least bale wrapping position. At least one segment of the bale surface to be wrapped is currently visible through the gap.
- The web detecting sensor senses the or at least one bale surface segment which is visible through the gap. The web detecting sensor detects whether or not the sensed surface segment is covered with the provided web of wrapping material.
- If the web detecting sensor detects that the or one sensed surface segment is not covered with provided web, the sensor generates an alert.
- At least if no alert is generated, the discharge gate is pivoted or otherwise moved into the bale ejecting position. The bale forming apparatus ejects the wrapped bale through the provided aperture out of the casing.

### ADVANTAGES

According to the invention the discharge gate can be moved between the bale forming position, the or one bale wrapping position, and the bale ejecting position. When the discharge gate is in the or one bale wrapping position, the casing is enlarged - compared with the bale forming position - and further space is provided in the interior of the casing. The further space makes it easier to wrap the bale surface. On the other hand it is possible to arrange the bale forming apparatus such that the casing keeps and holds together the bale not yet fully being wrapped while the discharge gate is in the bale wrapping position.

According to the invention the web detecting sensor senses a segment of the bale surface which is to be wrapped. This feature has the following advantage over a sensor which measures a movement of a web towards an inlet guiding into the casing: The web detecting sensor according to the invention also detects the possible malfunctions that the web is moved towards the inlet but not properly injected or is injected but does not reach the visible segment. One reason for the second malfunction can be that the injected web wraps around a pressing roller or further rotated part in place of covering the bale surface. A further reason may be that the injected web is guided out of the chamber again. A sensor which detects the web movement outside of a chamber containing the bale will not discover these malfunctions.

According to the invention the web detecting sensor decides whether or not web is present on the bale surface before the discharge gate is moved into the bale ejecting position. If no web is detected, an alert is generated. Thanks to the invention the following undesired event can be avoided: The pivotal discharge gate is moved into the bale ejecting position and a bale is ejected although the surface of the ejected bale is actually not wrapped. This undesired event would cause the further undesired event that the ejected bale falls apart. Thanks to the invention it is possible to take a countermeasure while the bale is still kept in the interior of the casing and before the discharge gate is fully opened, i.e. before the discharge gate is moved into the bale ejecting position.

The invention utilizes the feature that a gap between the further casing part and the discharge gate being in the or every bale wrapping position occurs. The bale is still kept in the interior of the casing while being wrapped. The web detecting sensor automatically investigates the or at least one bale surface segment which is visible through this gap. Therefore the web detecting sensor can be positioned in a sufficient distance to the bale surface and is less subjected to dirt or debris. In particular it is possible to place an image acquisition unit or a further signal receiver of the web detecting sensor outside of a chamber in which the bale surface is wrapped. It is not necessary to place the sensor between two adjacent parts of the bale forming device which define - together with other parts - the chamber. The bale does not touch the sensor - even if the bale in the chamber is moved with respect to the casing and thereby with respect to the gap. The distance between the bale and the sensor can be selected as small or as large as possible and necessary. The risk that the sensor is polluted or damaged by debris from the bale is decreased.

Thanks to the invention it is possible to implement the web detecting sensor as a sensor which operates in a contactless manner. This embodiment further reduces the risk that the sensor is polluted or damaged.

In general the bale is rotated or otherwise moved with respect to the casing while the bale surface is wrapped. Web is pulled from a reservoir and is injected into the casing and is placed on the bale surface. The provided web is moved together with the bale. Therefore the web detecting sensor can subsequently scan and sense different segments of the bale surface through the same gap. Every surface segment is visible through the gap. As different segments can subsequently be sensed, it is possible to keep the gap small. Nevertheless the web detecting sensor can sense the entire bale surface to be wrapped or at least a significant part of it.

Thanks to the feature that the web detecting sensor senses the bale surface through the gap it is in particular not necessary that a part of the web detecting sensor touches the bale surface. The web detecting sensor is not exposed to the expanding force of the compressed loose material forming the bale. Thanks to the gap it is possible that the web detecting sensor is mounted at the further casing part or at the frame or chassis of the baler. It is possible but not necessary to mount it at the moveable discharge gate.

Thanks to the distance between sensor and bale surface it is easier to perform maintenance or repair work at the sensor, in particular to replace a sensor part. It is possible but not necessary to move the discharge gate into the bale ejecting position before performing maintenance or repair.

A bale forming apparatus with the features of the preamble of claim 1 and a method using such a bale forming apparatus, i.e. with the features of the preamble of claim 10, already provides the gap for the purpose of wrapping the bale. It is not necessary to amend the discharge gate and thereby to provide a gap specially for checking whether or not the bale surface is actually wrapped. The invention can be implemented just by mounting the web detecting sensor according to the invention on an existing bale forming apparatus with the features of the preamble of claim 1.

### PREFERED EMBODIMENTS

According to the invention an alert is generated if the web detecting sensor detects the event that the sensed surface segment is not wrapped. In one embodiment this alert is generated in a human-perceptible form and is given to a human operator. In one application it is up to the operator to keep the discharge gate in the bale wrapping position and to take a suitable measure for making the bale surface to be wrapped.

In a further embodiment the alert is transferred to a control unit. The control unit automatically inhibits at least temporarily the step of moving the discharge gate from the bale wrapping position into the bale ejecting position. The discharge gate is kept in the or one bale wrapping position. Thanks to this embodiment the undesired event is automatically avoided that the discharge gate is moved into the bale ejecting position and the bale is ejected although the bale surface is not wrapped.

Both embodiments can be combined, i.e. the step of opening the discharge gate is automatically inhibited and an alert is given to the operator such that the operator is informed about the malfunction and why the discharge gate is not opened.

In one embodiment a signal triggers the web providing device to start providing the web. In a further implementation a signal is generated after a movement of the provided web is detected. In both implementations the following event occurs after the signal is generated and some time has passed: If the web is properly conveyed, it reaches the bale surface to be wrapped after some time has passed. In one embodiment of the invention a time span is given. This given time span depends on the scheduled time which the properly conveyed web needs for reaching the bale surface. If the web detecting sensor does not detect web on the visible bale surface segment after providing the web is started or a web movement is detected and the given time span has passed, the alert is generated.

In one embodiment a signal is given to the operator if the bale surface is properly wrapped and no alert is generated. It is up to the operator to open the discharge gate. In a further embodiment the discharge gate is automatically opened if no alert is generated. It is also possible that the discharge gate is automatically opened and the signal is given to the operator. In one embodiment the baler belongs to a vehicle which is moved over ground. A ground sensor measures the inclination or a further value (moisture, presence of rigid objects, e.g.) of a location at which the bale may be deposited. Only if the inclination or further values enable depositing the bale at this location, the discharge gate is automatically opened and the bale is deposited on the ground at this location.

In one embodiment the discharge gate is automatically opened only if the web detecting sensor has positively generated a signal that web is detected on the or every sensed bale surface segment. This embodiment prevents the undesired situation that the bale surface is not properly wrapped but no alert is generated due to a sensor malfunction.

In one embodiment the discharge gate can be moved from the bale forming position into a further bale wrapping position and from the further bale wrapping position into the bale wrapping position and from the bale wrapping position into the bale ejecting position. A further gap between the further casing part and the discharge gate being in the further bale wrapping position occurs. The further gap is smaller than the gap occurring in the bale wrapping position and is therefore also smaller than the aperture.

In one embodiment the web is injected into the casing and touches the bale when the discharge gate is still in the bale forming position. This embodiment increases the reliability that the injected web is actually grasped by the bale. In a further embodiment the discharge gate is in the or one bale wrapping position when the web is injected.

In one embodiment the bale surface is at least partially wrapped while the discharge gate is in the further bale wrapping position. Thanks to this partial wrap the bale does not fall apart when the discharge gate is moved into the bale wrapping position with the enlarged gap.

The web detecting sensor senses the or one bale surface segment visible through the gap and/or through the further gap. The surface segment visible through the further gap is smaller than the segment visible through the gap but is visible earlier as the further gap occurs earlier than the gap.

In one embodiment an illumination source illuminates through the gap the or every surface segment to be sensed. This gap occurs when the discharge gate is in the bale wrapping position. Thanks to this illumination source the operation of the bale forming apparatus does not depend on the environmental conditions, in particular not on the available daylight. Thanks to the gap also the illumination source can be positioned with a sufficient distance to the bale surface. The illumination source is not subjected to dirt and debris.

In a preferred embodiment the web detecting sensor comprises at least one image acquisition unit, e.g. a digital camera, or a further signal receiver. This image acquisition unit or further signal receiver receives through the gap signals from the scanned bale surface to be wrapped and is entirely positioned outside of a chamber in which the bale surface is to be wrapped. An evaluating unit receives signals from the image acquisition unit or further signal receiver and is also positioned outside of the chamber. This evaluating unit automatically evaluates the signals and decides whether or not the bale surface is properly wrapped.

In one embodiment the web detecting sensor is an optical sensor which acquires through the gap at least one image from the bale surface, e.g. by means of a digital camera. The image acquisition unit, e.g. the camera, is positioned outside of the wrapping chamber. The or every image is taken through the gap when the discharge gate is in the or one bale wrapping position. The web detecting sensor evaluates these images and decides whether or not the images show the presence of web on the visible bale surface segment.

The optical sensor can in particular operate in the visible light spectrum, in the infrared light spectrum, or in the ultraviolet light spectrum. An illumination source can provide the corresponding light.

It is also possible that a wave source sends ultrasonic waves through the gap onto the bale surface and that the sensor evaluates the reflected ultrasonic waves.

In one embodiment the sensor determines the color or the colors of the bale surface as being visible through the gap. The color of the non-wrapped bale surface distinguishes from the color of the wrapped bale surface. The color of the non-wrapped bale surface is determined by the color of the loose material which is used for forming the bale.

In one implementation this loose material color is automatically measured before the bale surface is wrapped. In a further implementation an operator enters the color of the loose material. Two similar implementations are possible for determining the color of the wrapping material: The color of the wrapping material is automatically determined. Or the color is entered by the operator.

The embodiment with analyzing the color of the bale surface can be used for different kinds of wrapping material, in particular for a sheet as well as for a fabric (net or twine strands, e.g.). In the case of a bale surface wrapped into fabric the wrapped bale surface shows the color of the loose material as well as the color of the fabric. In the case of a sheet the surface of the properly wrapped bale is only determined by the color of the sheet.

If a fabric (net or twine strands) is used for wrapping the bale, the sensor according to one embodiment checks whether or not the or at least some images taken through the gap show a given pattern which is caused by the fabric, e.g. a grid or several parallel lines. If this pattern is missing, the bale surface is actually not wrapped into the fabric and the alert is generated.

One embodiment of the invention can in particular be applied to a round-cylindrical bale with a circumferential surface entirely to be wrapped. The embodiment enables the decision whether or not the circumferential bale surface to be wrapped is actually wrapped over the entire width. Thanks to this embodiment the desired result that the entire surface width is wrapped can be distinguished from the undesired events that the bale surface is not wrapped at all or is only partially wrapped. In the case of a round-cylindrical bale often the circumferential surface of the bale is entirely to be wrapped. In this case it can in particular be decided if the web reaches from edge to edge, i.e. covers the entire circumferential surface (the desired outcome).

Preferably the bale is rotated or otherwise moved with respect to the casing at least while the discharge gate is in the or one bale wrapping position. Thereby the bale surface is moved with respect to the gap. The moved bale and the bale forming apparatus together clamp and move the injected web of wrapping material such that the bale surface is wrapped. Thanks to this movement different surface segments are subsequently visible through the gap wherein one segment is visible per time and every visible segment belongs to the bale surface to be wrapped. The web detecting sensor senses a sequence of such surface segments. It is possible that subsequent sensed surface sequence overlaps. Thanks to this embodiment more kinds of malfunctions can be detected. It is possible that the sequence of segments together cover the entire bale surface to be wrapped.

In one embodiment the web detecting sensor evaluates an entire sequence of images from the visible surface segments. If no segment image shows a web or if at least n (n >= 1) segments do not show the web, the alert is generated. The n segments may be the last sensed surface segments. Thereby no alert is generated if the segments of the web reach the gap later than expected but the web is properly placed on the bale surface. It is possible that the number n is selected so high that the false alert is avoided and the number n is selected so low that every wrapping error leads to an alert.

According to one preferred embodiment a plurality of sensing cells is positioned in a sequence. This sequence extends parallel to the gap axis - that is the axis of the gap between the further casing part and the discharge gate being in the or one bale wrapping position. Every sensing cell monitors one segment part of the visible bale surface segment. The monitored segment parts are positioned in a sequence parallel to the gap axis and together cover the entire surface segment visible through the gap. Thanks to this embodiment several sensing cells can be used wherein every single sensing cell does not necessarily cover the entire gap. It is possible that adjacent segment parts overlap. Therefore the bale surface can be monitored even if one sensor cell malfunctions.

Preferably the web detecting sensor is mounted at the further casing part or at a frame of the bale forming apparatus.

In one application the bale is a round-cylindrical object. The entire circumferential surface of this bale is to be wrapped. It is also possible that the entire surface of the bale, i.e. also the front faces, is to be wrapped while the bale is in the interior of the casing. Further bale shapes are possible.

In one application the invention is used on board of a continuous or non-stop baler. Thanks to the bale wrapping position of the discharge gate it is possible that the bale forming apparatus wraps a surface of a bale in the interior of the casing while the discharge gate is in the or one bale wrapping position and simultaneously processes further crop material, e.g. in a bale forming chamber or in a buffering chamber. Thanks to the bale wrapping position a larger distance between the discharge gate and an inlet for loose material is achieved. As this simultaneous operation is possible, it is not necessary to stop the movement of the baler over ground while the bale is wrapped. Therefore the bale forming apparatus according to the invention can operate as a continuous baler or non-stop baler, i.e. can continuously be moved over ground during operation.

It is also possible to use the invention on board of a conventional baler, i.e. a baler which forms and wraps the bale in the same chamber and does not comprise a further chamber. Therefore the conventional baler has to interrupt the step of picking up or otherwise taking material such that no material is injected into the chamber while the bale is wrapped. The bale wrapping position of the discharge gate provides additional space for wrapping the bale surface.

In one embodiment the discharge gate is first moved from the bale forming position into the or one bale wrapping position. Afterwards the process of wrapping the bale surface is commenced. In a further embodiment the process of wrapping the bale surface is started with the discharge gate already being in the bale forming position. While the bale surface is wrapped, the discharge gate is moved into the or one bale wrapping position.

These and other aspects of the invention and of the preferred embodiment will be even more apparent from the detailed embodiment as described below and will be elucidated in detail there.

### BRIEF DESCRIPTION OF THE DRAWINGS

Fig. 1 shows the bale forming apparatus of the embodiment with the tailgate in the bale forming position;
Fig. 2 shows the bale forming apparatus of Fig. 1 with the tailgate in the initial bale wrapping position and with a small gap;
Fig. 3 shows the bale forming apparatus of Fig. 2 with the tailgate in the final bale wrapping position and with a larger gap;
Fig. 4 shows the bale forming apparatus of Fig. 1 with the tailgate in the bale ejecting position.

### DETAILED DESCRIPTION OF EMBODIMENT

In the embodiment the invention is used in a continuous round baler as disclosed in WO 2013/157950 A1 and WO 2013/157949 A1 and WO 2013/157948 A1, e.g. A first segment of an endless elastic pressing belt surrounds a bale forming chamber. A second segment of the same pressing belt surrounds a bale wrapping chamber. The pressing belt and thereby both chambers are surrounded by a casing comprising a stationary front housing serving as the further casing part and a pivotal tailgate serving as the moveable discharge gate. The tailgate (discharge gate) can be pivoted with respect to the stationary front housing subsequently into four different positions:
- a bale forming position,
- an initial bale wrapping position serving as the further bale wrapping position,
- a final bale wrapping position serving as the bale wrapping position, and
- a bale ejecting position.

The front housing and the tailgate being in the bale forming position entirely cover the pressing belt and thereby both chambers - with the exception of a crop material inlet and the inevitable space between the front housing and the tailgate. A small gap occurs between the front housing and the tailgate being in the initial bale wrapping position. A larger gap occurs between the front housing and the tailgate being in the final bale wrapping position. A segment of the bale surface is visible through this gap. This gap does not occur when the tailgate is in the bale forming position. The tailgate is rigidly but releasable connected with the front housing when the tailgate is in the bale forming position or is in one of the bale wrapping positions.

This connection is released when the tailgate is to be pivoted into the bale ejecting position. An aperture between the front housing and the tailgate being in the bale ejecting position occurs. This aperture suffices for ejecting a bale out of the wrapping chamber such that the ejected bale drops on the ground GS.

Fig. 1 to Fig. 4 show the bale forming apparatus of the embodiment with the tailgate being in the bale forming position (Fig. 1), the initial bale wrapping position (Fig. 2), the final bale wrapping position (Fig. 3), and the bale ejecting position (Fig. 4). The bale forming apparatus 1 of the embodiment comprises the following parts:
- a towing unit 4 for connecting the baler 1 with a pulling tractor or further propelled vehicle (not shown),
- a frame 2,
- two ground-engaging wheels 3 which are rotatably mounted at the frame 2,
- a crop intake device 5 with an inlet 6 and an outlet 7,
- two driven starter rollers 8.1, 8.2 which delimit the crop material inlet from above and from below,
- at least one tensioned endless pressing belt 10,
- a stationary front housing 15 which serves as the further casing part,
- a pivotal tailgate 11 which serves as the moveable discharge gate and comprises a tailgate frame 17 connected with the front housing 15 and a pivotal tailgate bottom 18,
- a tailgate bottom roller 19 mounted at the free end of the tailgate bottom 18,
- a wrapping device 20 with an unrolling station for carrying a supply reel 88 for wrapping material,
- two parallel supporting disks 23 which can rotate around a common pivoting axis 25 (perpendicular to the drawing planes of Fig. 1 to Fig. 4),
- two pushing rollers 24.1, 24.2 mounted at the circumferential surface of the supporting disks 23,
- two pivotal guiding rollers 28.1, 28.2,
- a pivotal tensioning device with three guiding rollers,
- a pivotal ramp 37,
- a pivotal tensioning arm 60 carrying a further guiding roller, and
- a web detecting sensor 99 (Fig. 3).

The tailgate bottom 18 is pivotal with respect to the tailgate frame 17 around a horizontal pivoting axis 22. The tailgate frame 17 and thereby also the tailgate bottom 18 can pivot with respect to the front housing 11. The or every pressing belt 10 is guided around the deflecting roller 19 at the tailgate bottom 18, around the three rollers at the pivotal tensioning device, around a roller mounted on the tensioning arm 60, around one of the pivotal guiding rollers 28.1, 28.2, and around several further guiding rollers. The wrapping device 20 is mounted at the tailgate frame 17. The starter rollers 8.1, 8.2 and the or every pressing belt 10 belong to a bale forming device 9.

The baler according to the embodiment operates as follows:
- The baler 1 is pulled in the travelling direction TD (in Fig. 1 from right to left) over the ground surface GS.
- The intake device 6 picks up loose crop material from the ground GS.
- The picked-up loose crop material is conveyed into a drum-shaped bale forming chamber Ch which is delimited by the starter rollers 8.1, 8.2 and by a segment of the or every pressing belt 10.
- An increasing round-cylindrical bale B with a circumferential surface and two parallel front faces is formed from the injected loose material in the bale forming chamber Ch and is rotated (in Fig. 1 to Fig.3 anti-clockwise). The bale forming chamber Ch itself increases and tensions the or every pressing belt 10.
- After the measured current diameter of the round-cylindrical bale B has reached a given diameter threshold, e.g. the required final diameter, a pivotal web pusher (not shown) presses a leading segment of a web of wrapping material against the outer surface of the or at least one pressing belt 10. As the belt 10 continues to move, the pressed web is pulled from the supply reel 88 and is injected into the bale forming chamber Ch. The web is injected through the space between the starter roller 8.2 and that segment of the or every belt 10 which is guided around the deflecting roller 19. The discharge gate 11 remains in the bale forming position (Fig. 1).
- After the injected web is securely grasped and clamped by the rotated bale B and the or every pressing belt 10, the tailgate bottom 18 is lowered downwards away from the front housing 15. Thereby the tailgate 11 is pivoted from the bale forming position into the initial bale wrapping position (Fig. 2). The space between the roller 8.2 and the belt segment guided around the roller 19 is enlarged such that a small gap is formed (Fig. 2).
- Now the partially wrapped bale B is moved out of the bale forming chamber Ch into a drum-shaped bale wrapping chamber Ch' positioned above and supported by the tailgate bottom 18. This bale wrapping chamber Ch' is surrounded by a further segment of the or every pressing belt 10. For moving the bale B onto the tailgate bottom 18, the supporting disks 23 are jointly rotated around 180 degrees. A pushing roller 24.1 or 24.2 pushes the formed bale B backwards, i.e. away from the intake device 5, onto the tailgate bottom 18. For enabling this movement, the lowered tailgate 11 is slightly moved backwards away from the front housing 15 and is no longer in the initial bale wrapping position but is in the final bale wrapping position (Fig. 3).
- An enlarged gap N occurs between the stationary front housing 15 and the pivotal tailgate 11 being in the final bale wrapping position. In the embodiment this enlarged gap N occurs between the deflecting roller 19 at the tailgate bottom 18 on the one side and the lower starter roller 8.2 on the other side, cf. Fig. 3.
- The bale B resting on the tailgate bottom 18 is now in the bale wrapping chamber Ch' which is surrounded by a further segment of the or every pressing belt 10. The or every pressing belt 10 rotates the bale B resting on the tailgate bottom 18. The web is still pulled from the supply reel 88 and is injected through this gap N into the bale wrapping chamber Ch'. The injected web is clamped between the rotated bale B and the or every pressing belt 10 and is pulled from the supply reel 88.
- As the bale B has been moved out of the bale forming chamber Ch, the bale forming chamber Ch can take further crop material. While the circumferential surface of the bale B is wrapped while the bale (B) is in the bale wrapping chamber Ch', further crop material is injected into the bale forming chamber Ch and a new bale B' is formed, cf. Fig. 3. The baler 1 temporarily carries two bales B, B'.
- When the circumferential surface of the bale B on the tailgate bottom 18 is wrapped into the required number of wrapping material layers, the web is severed and the tailgate 11 is pivoted into the bale ejecting position. Thanks to the tensioning force of the or every pressing belt 10 the wrapped bale B is ejected out of the bale wrapping chamber Ch'.

One guiding roller 28.1 or 28.2 delimits the two segments of the or every pressing belt 10 which surround the two chambers Ch and Ch'.

The web detecting sensor 99 of the embodiment is mounted at the front housing 15 or at the frame 2, cf. Fig. 3. Thereby the sensor 99 is not moved when the discharge gate 11 is pivoted. The sensor 99 checks and decides whether or not the entire circumferential surface is wrapped into a web of wrapping material while the bale B is in the bale wrapping chamber Ch' and the tailgate 11 is in the final bale wrapping position of Fig. 3. The web detecting sensor 99 automatically generates an alert if the web detecting sensor 99 does not detect the presence of web on the bale surface.

The automatically generated alert triggers at least one of the following measures:
- The wrapping procedure is restarted, i.e. performed again.
- The tailgate 11 remains in the final bale wrapping position until the web detecting sensor 99 positively detects that the bale surface is wrapped.
- An alert is given to the operator. The tailgate 11 is opened (is moved into the bale ejecting position) if a corresponding user input is registered.

Fig. 3 shows the web detecting sensor 99 which senses the bale surface through the nib N and thereby senses a currently visible segment of the bale surface. As the bale B in the wrapping chamber Ch' is rotated, several different segments are visible through the nib N - one segment after the other. Subsequent visible segments may overlap. The sensor 99 senses this sequence of visible surface segments. The web detecting sensor 99 operates in a distance to the bale B which rests on the tailgate bottom 18 and is currently wrapped.

The web detecting sensor 99 of the embodiment comprises an image acquisition unit (camera), an illumination source, and an evaluating unit. The illumination source illuminates that bale surface segment which is currently visible through the gap N with light in the visible spectrum or infrared spectrum or ultraviolet spectrum. Thanks to the illumination source the operation of the web detecting sensor 99 does not depend on daylight. The image acquisition unit takes images of that segment of the bale surface which is currently illuminated and is visible through the gap N. The evaluation unit evaluates the images taken by the image acquisition unit and decides whether or not wrapping material is visible in the images. It is possible but not necessary to use a specific kind of wrapping material which is adapted to the web detecting sensor 99. It is also possible that the web detecting sensor 99 is adapted to the or every used kind of wrapping material.

In the embodiment the web detecting sensor 99 takes and evaluates images while the tailgate 11 is in the bale wrapping position of Fig. 3 and the extended gap N occurs. In one implementation the bale surface with the injected web has already reached the location which is visible through the gap N when the tailgate bottom 18 is pivoted into the final bale wrapping position of Fig. 3. Therefore every image visible through the nib N must show the wrapping material. Otherwise the alert is generated. It is possible that m images (m ≥ 1) not showing the web are ignored for avoiding a false alert.

In a further implementation the tailgate bottom 18 is pivoted into the final bale wrapping position of Fig. 3 before the bale surface segment with the front edge of the web has reached a location which is visible through the gap N. At least in this implementation the event is detected that web is pulled from the supply reel 88, e.g. by monitoring a roller which deflects the web and which is mounted outside of the casing 11, 15. Depending on the construction of the baler 1 and on the circumferential velocity of the bale B in the bale wrapping chamber Ch' a time period is derived in advance. If the web movement is detected but no wrapping material is visible in at least n images taken after the time period has passed (n>=1 given), the alert is automatically generated. The number n is selected such that delays in moving the web or the wrapped bale surface do not cause a false alert.

In one application a net or several strands of twine are used as wrapping material and hides the crop material pressed to the bale B. In this application the evaluation unit preferably searches patterns of a fabric (net or twine) in the images. In the images the web as well as crop material are visible.

In a further application a plastic sheet or film is used as the wrapping material. In this case the evaluating unit preferably decides whether the or some images show plastic sheet or crop material. If no plastic sheet is detected, the alert is generated. Preferably the decision is made on the basis of the color of the bale surface and/or of the plastic sheet. It is also possible that the texture of the bale surface is classified by evaluating the images.

In one embodiment the user (operator) enters the expected color of crop material and/or the color of the used plastic sheet. In a further implementation these colors are given in advance to the evaluating unit, e.g. as a part of a software program.

The gap N extends along a gap axis (perpendicular to the travelling direction TD and to the drawing plane of Fig. 3). In one embodiment the web detecting sensor 99 comprises one image acquisition unit. In a further application several sensing cells (image acquisition units) are positioned in a sequence along the gap axis. Every sensing cell takes images from one part of that bale surface segment which is currently visible through the gap N. The segment parts together cover the entire currently visible bale surface segment. Adjacent segment parts may overlap. Every sensing cell delivers signals to the evaluating unit. The image acquisition unit evaluates the images for the segment parts and decides for every segment part if the images from this segment part shows wrapping material or does not show wrapping material. The decision result can distinguish from segment part to segment part of the same segment, i.e. for different segment parts sensed at the same time. Thanks to the array of sensing cells the evaluating unit can not only decide whether or not wrapping material is at all on the bale surface but can also determine if the entire width of the circumferential surface is wrapped with wrapping material (the desired wrapping result) or only a part of the circumferential surface is wrapped.

Reference signs used in the claims will not limit the scope of the claimed invention. The term "comprises" does not exclude other elements or steps. The articles "a", "an", and "one" do not exclude a plurality of elements.

**LIST OF REFERENCE SIGNS**

| | |
|---|---|
| 1 | bale forming apparatus |
| 2 | frame of the bale forming apparatus 1, carries the wheels 3 |
| 3 | ground-engaging wheels of bale forming apparatus 1 |
| 4 | front end with towing unit |
| 5 | intake device for crop material, comprises inlet 6 and outlet 7 |
| 6 | inlet of intake device 5 |
| 7 | outlet of intake device 5 |
| 8.1, 8.2 | stationary driven starter rollers, delimit from above and from below the crop material inlet guiding into the bale forming chamber Ch, belong to the bale forming device 9 |
| 9 | bale forming device, comprises at least one endless belt 10 and the starter rollers 8.1, 8.2 |
| 10 | endless belt(s), belong to the bale forming device 9, surround the bale forming chamber Ch and the bale wrapping chamber Ch' |
| 11 | pivotal tailgate, serves as the pivotal discharge gate, comprises the tailgate frame 17 and the tailgate bottom 18 |
| 15 | stationary front housing |
| 17 | tailgate frame |
| 18 | tailgate bottom, pivotal with respect to the tailgate frame 17 around the axis 22 |
| 19 | tailgate bottom roller, mounted at tailgate bottom 18 |
| 20 | wrapping device, mounted at the tailgate frame 17, comprises an unrolling station for carrying a supply reel 88 for wrapping material |
| 22 | pivoting axis of the tailgate bottom 18 with respect to the tailgate frame 17 |
| 23 | supporting disks, carries the pushing rollers 24.1, 24.2 |
| 24.1 | pushing roller, pushes the second bale B' |
| 24.2 | further pushing roller, pushes the first bale B |
| 25 | common rotating axis of both supporting disks 23 |
| 28.1, 28.2 | pivotal guiding rollers |
| 32 | coupling device, comprises the disk engaging hook 33 and the disk locking cylinder 83 |
| 33 | disk engaging hook of the coupling device, can engage one coupling pin 34.1, 34.2, 34.3 |
| 34 | coupling pins which can be coupled with the disk engaging hook 33 |
| 35 | retarding device for the supporting disks 23 |
| 36 | fixed guiding roller above the starter roller 8.1 |
| 37 | pivotal ramp |
| 60 | pivotal tensioning arm for the pressing belt(s) 10 |
| 88 | supply reel for wrapping material |
| 99 | web detecting sensor, comprises an image acquisition unit, an evaluating unit, and optionally an illumination source |
| B | first bale |
| B' | second bale |
| Ch | bale forming chamber, surrounded by a segment of the or every pressing belt 10 |
| Ch' | bale wrapping chamber above the tailgate bottom 18, surrounded by a further segment of the or every pressing belt 10 |
| GS | ground surface over which the baler 1 moves |
| N | gap between front housing and tailgate 11, occurs when the tailgate 11 is in the final bale wrapping position |
| TD | travelling direction of the bale forming apparatus 1 |

## Claims

1. Bale forming apparatus (1) comprising
- a bale forming device (9),
- a casing (11, 15) with a moveable discharge gate (11) and a further casing part (15), and
- a web providing device (20),
wherein the moveable discharge gate (11) is movable with respect to the further casing part (15) between
- a bale forming position (Fig. 1),
- at least one bale wrapping position (Fig. 2, Fig. 3), and
- a bale ejecting position (Fig. 4),
wherein a or a respective gap (N) between the further casing part (15) and the discharge gate (11) being in the or one bale wrapping position (Fig. 2, Fig. 3) occurs, wherein an aperture between the further casing part (15) and the discharge gate (11) being in the bale ejecting position (Fig. 4) occurs,
wherein the aperture is larger than the or every gap (N),
wherein the bale forming device (9) is arranged to form a bale (B) in the interior of the casing (11, 15) while the discharge gate (11) is in the bale forming position,
wherein the web providing device (20) is arranged to provide a web of wrapping material,
wherein the bale forming apparatus (1) is arranged to wrap a surface of the bale (B) in the interior of the casing (11, 15) into the provided web while the discharge gate (11) is in the or one bale wrapping position (Fig. 2, Fig. 3), and
wherein the bale forming apparatus (1) is arranged to eject the wrapped bale (B) through the aperture out of the casing (11, 15) when the discharge gate (11) is in the bale ejecting position (Fig. 4),
**characterized in that**
the bale forming apparatus (1) further comprises a web detecting sensor (99) arranged to detect whether or not the provided web is present on the surface of the bale (B) in the interior of the casing (11, 15),
wherein the web detecting sensor (99) is arranged
- to sense at least one segment of the bale surface to be wrapped,
wherein the or every sensed surface segment is visible through the gap (N), and
- to generate an alert if the non-presence of web on the or one sensed surface segment is detected.

2. Bale forming apparatus according to claim 1,
**characterized in that**
the bale forming apparatus (1) is arranged to automatically inhibit the movement of the discharge gate (11) into the bale ejecting position (Fig. 4)
if the web detecting sensor (99) has generated an alert due to detecting the non-presence of web on the or one sensed surface segment.

3. Bale forming apparatus according to one of the preceding claims,
**characterized in that**
the bale forming apparatus (1) is arranged to pivot the discharge gate (11)
- from the or one bale wrapping position (Fig. 2, Fig. 3)
- into the bale ejecting position (Fig. 4)
only if the web detecting sensor (99) has positively detected the presence of web on the or every sensed bale surface segment.

4. Bale forming apparatus according to one of the preceding claims,
**characterized in that**
the bale forming apparatus (1) further comprises an illumination source which is arranged to illuminate the or every sensed bale surface segment through the provided gap (N).

5. Bale forming apparatus according to one of the preceding claims,
**characterized in that**
the gap (N) occurs along a gap axis and
the web detecting sensor (99) comprises an array of sensing cells which are positioned in a sequence parallel to the gap axis,
wherein every sensing cell is arranged to detect whether or not a part of the or every bale surface segment is wrapped and
wherein the segment parts
- are visible through the gap (N) and
- are positioned in a sequence parallel to the gap axis on the bale surface to be wrapped.

6. Bale forming apparatus according to one of the preceding claims,
**characterized in that**
the bale forming apparatus (1) is arranged to move the bale (B) with respect to the casing (11, 15) and thereby with respect to the gap (N)
at least while the discharge gate (11) is in the or one bale wrapping position and the bale surface is wrapped,
wherein the web detecting sensor (99) is arranged to subsequently sense through the gap (N) different visible segments of the bale surface to be wrapped.

7. Bale forming apparatus according to one of the preceding claims,
**characterized in that**
the discharge gate (11) is movable between
- the bale forming position (Fig. 1),
- a further bale wrapping position (Fig. 2),
- the bale wrapping position (Fig. 3), and
- the bale ejecting position (Fig. 4),
wherein a further gap between the further casing part (15) and the discharge gate (11) being in the further wrapping position (Fig. 2) occurs and
wherein the further gap is smaller than the gap (N) occurring when the discharge gate (11) is in the bale wrapping position.

8. Bale forming apparatus according to one of the preceding claims,
**characterized in that**
the bale forming apparatus (1)
- provides a wrapping chamber (Ch') in the interior of the casing (11,15) and
- is arranged to wrap in the wrapping chamber (Ch') the surface of the bale (B),
wherein the web detecting sensor (99) is arranged to sense at least one segment of the surface to be wrapped of the bale (B) in the wrapping chamber (Ch')
- through the gap (N) between the further casing part (15) and the discharge gate (11) and
- through a corresponding gap in the wrapping chamber (Ch').

9. Bale forming apparatus according to claim 8,
**characterized in that**
the bale forming apparatus (1)
- provides a further chamber (Ch) in the interior of the casing (11, 15),
- is arranged to form the bale (B) with the surface to be wrapped in the further chamber (Ch),
- is arranged to move the bale (B) into the chamber (Ch'), and
- is arranged to inject loose material into the further chamber (Ch) while wrapping the surface of the bale (B) in the wrapping chamber (Ch').

10. Method for forming at least one bale (B) by using a bale forming apparatus (1) comprising
- a bale forming device (9),
- a casing (11, 15) with a moveable discharge gate (11) and a further casing part (15), and
- a web providing device (20),
wherein the method comprises the steps that
- the bale forming device (9) forms the bale (B) in the interior of the casing (11,15) while the discharge gate (11) is in a bale forming position,
- the web providing device (20) provides a web of wrapping material,
- the discharge gate (11) is moved with respect to the further casing part (15)into a bale wrapping position (Fig. 2, Fig. 3) such that a gap (N) between the further casing part (15) and the discharge gate (11) occurs,
- a surface of the bale (B) is wrapped while the bale (B) is in the interior of the casing (11,15) and while the discharge gate (11) is in the bale wrapping position (Fig. 2, Fig. 3),
- the discharge gate (11) is moved with respect to the further casing part (15)into a bale ejecting position such that an aperture between the further casing part (15) and the discharge gate (11) occurs
wherein the aperture is larger than the gap (N), and
- the wrapped bale (B) is ejected through the aperture out of the casing (11, 15) while the discharge gate (11) is in the bale ejecting position (Fig. 4),
**characterized in that**
the bale forming apparatus (1) further comprises a web detecting sensor (99),
wherein the step that the surface of the bale (B) is wrapped comprises the steps that
- the web detecting sensor (99) senses at least one segment of the bale surface to be wrapped,
wherein the or every sensed surface segment is visible through the gap (N),
- the web detecting sensor (99) detects whether or not the provided web is present on the or every sensed surface segment, and
- an alert is generated if the web detecting sensor (99) detects the non-presence of web on the or at least one sensed surface segment.

11. Bale forming method according to claim 10,
**characterized in that**
the step that an alert is generated triggers the event that
the movement of the discharge gate (11) into the bale ejecting position (Fig. 4) is at least temporarily automatically inhibited.

## Patentansprüche

1. Ballenformvorrichtung (1) mit
- einem Ballenformgerät (9),
- einem Gehäuse (11, 15) mit einem beweglichen Ausstoßtor (11) und einem weiteren Gehäuseteil (15), und
- einem Bahnenspendegerät (20),
wobei das bewegliche Ausstoßtor (11) in Bezug auf den weiteren Gehäuseteil (15) zwischen
- einer Ballenformposition (Fig. 1),
- mindestens einer Balleneinwickelposition (Fig. 2, Fig. 3), und
- einer Ballenausstoßposition (Fig. 4)
beweglich ist,
wobei eine oder eine jeweilige Lücke (N) zwischen dem weiteren Gehäuseteil (15) und dem Ausstoßtor (11) auftritt, wenn sich das Ausstoßtor (11) in der oder einer Balleneinwickelposition (Fig. 2, Fig. 3) befindet,
wobei eine Öffnung zwischen dem weiteren Gehäuseteil (15) und dem Ausstoßtor (11) auftritt, wenn sich das Ausstoßtor (11) in der Ballenausstoßposition (Fig. 4) befindet,
wobei die Öffnung größer ist als die oder jede Lücke (N),
wobei das Ballenformgerät (9) dazu angeordnet ist, einen Ballen (B) im Inneren des Gehäuses (11, 15) zu formen, während sich das Ausstoßtor (11) in der Ballenformposition befindet,
wobei das Bahnenspendegerät (20) dazu angeordnet ist, eine Bahn Einwickelmaterial bereitzustellen,
wobei die Ballenformvorrichtung (1) dazu angeordnet ist, eine Oberfläche des Ballens (B) in dem Inneren des Gehäuses (11, 15) in die bereitgestellte Bahn einzuwickeln, während sich das Ausstoßtor (11) in der oder einer Ballenwickelposition (Fig. 2, Fig. 3) befindet, und
wobei die Ballenformvorrichtung (1) dazu angeordnet ist, den eingewickelten Ballen (B) durch die Öffnung aus dem Gehäuse (11, 15) auszustoßen, wenn sich das Ausstoßtor (11) in der Ballenausstoßposition (Fig. 4) befindet,
**dadurch gekennzeichnet, dass**
die Ballenformvorrichtung (1) weiterhin einen Bahndetektionssensor (99) aufweist, der dazu eingerichtet ist, zu detektieren, ob die bereitgestellte Bahn auf der Oberfläche des Ballens (B) im Inneren des Gehäuses (11, 15) vorhanden ist oder nicht,
wobei der Bahndetektionssensor (99) dazu eingerichtet ist,
- mindestens einen Teilbereich der einzuwickelnden Ballenoberfläche zu sensieren, wobei der oder jeder sensierte Oberflächenteilbereich durch die Lücke (N) sichtbar ist, und
- eine Warnung zu generieren, wenn das Nichtvorhandensein einer Bahn auf dem oder einem sensierten Oberflächenteilbereich detektiert wird.

2. Ballenformvorrichtung nach Anspruch 1,
**dadurch gekennzeichnet, dass**
die Ballenformvorrichtung (1) dazu eingerichtet ist, automatisch die Bewegung des Ausstoßtors (11) in die Ballenausstoßposition (Fig. 4) zu blockieren,
wenn der Bahndetektionssensor (99) eine Warnung generiert hat, da er das Nichtvorhandensein einer Bahn auf dem oder einem sensierten Oberflächenteilbereich detektiert hat.

3. Ballenformvorrichtung nach einem der vorhergehenden Ansprüche,
**dadurch gekennzeichnet, dass**
die Ballenformvorrichtung (1) dazu eingerichtet ist, das Ausstoßtor (11) nur dann
- aus der oder einer Balleneinwickelposition (Fig. 2, Fig. 3)
- in die Ballenausstoßposition (Fig. 4)
zu verschwenken, wenn der Bahndetektionssensor (99) das Vorhandensein einer Bahn auf dem oder jedem sensierten Ballenoberflächenteilbereich positiv detektiert hat.

4. Ballenformvorrichtung nach einem der vorhergehenden Ansprüche,
**dadurch gekennzeichnet, dass**
die Ballenformvorrichtung (1) weiterhin eine Beleuchtungsquelle aufweist,
die dazu angeordnet ist, den oder jeden sensierten Ballenoberflächenteilbereich durch die bereitgestellte Lücke (N) hindurch zu beleuchten.

5. Ballenformvorrichtung nach einem der vorhergehenden Ansprüche,
**dadurch gekennzeichnet, dass**
die Lücke (N) entlang einer Lückenachse auftritt und
der Bahndetektionssensor (99) eine Matrix von Sensorzellen aufweist, die in einer Abfolge parallel zu der Lückenachse angeordnet sind,
wobei jede Sensorzelle dazu angeordnet ist, zu detektieren, ob ein Abschnitt des oder jedes Ballenoberflächenteilbereichs eingewickelt ist oder nicht, und
wobei die Teilbereichsabschnitte
- durch die Lücke (N) hindurch sichtbar sind und
- in einer Abfolge parallel zu der Lückenachse auf der einzuwickelnden Ballenoberfläche angeordnet sind.

6. Ballenformvorrichtung nach einem der vorhergehenden Ansprüche,
**dadurch gekennzeichnet, dass**
die Ballenformvorrichtung (1) dazu eingerichtet ist, den Ballen (B) relativ zu dem Gehäuse (11, 15) und dadurch relativ zu der Lücke (N) zu bewegen,
wenigstens während sich das Auswurftor (11) in der oder einer Balleneinwickelposition befindet und die Ballenoberfläche eingewickelt wird,
wobei der Bahndetektionssensor (99) dazu eingerichtet ist, anschließend durch die Lücke (N) hindurch verschiedene sichtbare Teilbereiche der einzuwickelnden Ballenoberfläche zu sensieren.

7. Ballenformvorrichtung nach einem der vorhergehenden Ansprüche,
**dadurch gekennzeichnet, dass**
das Auswurftor (11) zwischen
- der Ballenformposition (Fig. 1),
- einer weiteren Balleneinwickelposition (Fig. 2),
- der Balleneinwickelposition (Fig. 3) und
- der Ballenauswurfposition (Fig. 4)
beweglich ist,
wobei eine weitere Lücke zwischen dem weiteren Gehäuseteil (15) und dem Auswurftor (11) auftritt, wenn sich das Auswurftor (11) in der weiteren Einwickelposition (Fig. 2) befindet, und wobei die weitere Lücke schmaler ist als die Lücke (N), die auftritt, wenn das Auswurftor (11) sich in der Balleneinwickelposition befindet.

8. Ballenformvorrichtung nach einem der vorhergehenden Ansprüche,
**dadurch gekennzeichnet, dass**
die Ballenformvorrichtung (1)
- eine Einwickelkammer (Ch') im Inneren des Gehäuses (11, 15) bereitstellt und
- dazu eingerichtet ist, in der Einwickelkammer (Ch') die Oberfläche des Ballens (B) einzuwickeln,
wobei der Bahndetektionssensor (99) dazu angeordnet ist, mindestens einen Teilbereich der einzuwickelnden Oberfläche des Ballens in der Einwickelkammer (Ch')
- durch die Lücke (N) zwischen dem weiteren Gehäuseteil (15) und dem Auswurftor (11) hindurch und
- durch eine entsprechende Lücke in der Einwickelkammer (Ch') hindurch zu sensieren.

9. Ballenformvorrichtung nach Anspruch 8,
**dadurch gekennzeichnet, dass**
die Ballenformvorrichtung (1)
- eine weitere Kammer (Ch) in dem Inneren des Gehäuses (11, 15) bereitstellt,
- dazu eingerichtet ist, den Ballen (B) mit der einzuwickelnden Oberfläche in der weiteren Kammer (Ch) zu formen,
- dazu eingerichtet ist, den Ballen (B) in die Kammer (Ch') zu bewegen und
- dazu eingerichtet ist, loses Material in die weitere Kammer (Ch) einzuführen, während sie die Oberfläche des Ballens (B) in der Einwickelkammer (Ch') einwickelt.

10. Verfahren zum Formen mindestens eines Ballens (B) unter Verwendung einer Ballenformvorrichtung (1) mit
- einem Ballenformgerät (9),
- einem Gehäuse (11, 15) mit einem beweglichen Ausstoßtor (11) und einem weiteren Gehäuseteil (15) und
- einem Bahnenspendegerät (20),
wobei das Verfahren die Schritte aufweist, dass
- das Ballenformgerät (9) den Ballen (B) im Inneren des Gehäuses (11, 15) formt, während sich das Ausstoßtor (11) in einer Ballenformposition befindet,
- das Bahnenspendegerät (20) ein Bahn Einwickelmaterial zur Verfügung stellt,
- das Ausstoßtor (11) relativ zu dem weiteren Gehäuseteil (15) in eine Balleneinwickelposition (Fig. 2, Fig. 3) bewegt wird, so dass eine Lücke (N) zwischen dem weiteren Gehäuseteil (15) und dem Ausstoßtor (11) auftritt,
- eine Oberfläche des Ballens (B) eingewickelt wird, während sich der Ballen (B) im Inneren des Gehäuses (11, 15) befindet und während sich das Ausstoßtor (11) in der Balleneinwickelposition (Fig. 2, Fig.3) befindet,
- das Ausstoßtor (11) relativ zu den weiteren Gehäuseteil (15) in eine Ballenausstoßposition bewegt wird, so dass eine Öffnung zwischen dem weiteren Gehäuseteil (15) und dem Ausstoßtor (11) auftritt,
wobei die Öffnung größer ist als die Lücke (N) und
- der eingewickelte Ballen (B) durch die Öffnung aus dem Gehäuse (11, 15) ausgestoßen wird, während das Ausstoßtor (11) sich in der Ballenausstoßposition (Fig. 4) befindet,
**dadurch gekennzeichnet, dass**
die Ballenformvorrichtung (1) weiterhin einen Bahndetektionssensor (99) aufweist,
wobei der Schritt, dass die Oberfläche des Ballens (B) eingewickelt wird, die Schritte aufweist, dass
- der Bahndetektionssensor (99) mindestens einen Teilbereich der einzuwickelnden Ballenoberfläche sensiert,
wobei der oder jeder sensierte Oberflächenteilbereich durch die Lücke (N) hindurch sichtbar ist,
- der Bahndetektionssensor (99) detektiert, ob die bereitgestellte Bahn auf dem oder jedem sensierten Oberflächenteilbereich vorhanden ist, und
- eine Warnung generiert wird, wenn der Bahndetektionssensor (99) das Nichtvorhandensein einer Bahn auf dem oder mindestens einem sensierten Oberflächenteilbereich detektiert.

11. Ballenformverfahren nach Anspruch 10,
**dadurch gekennzeichnet, dass**
der Schritt, dass eine Warnung generiert wird, das Ereignis auslöst, dass
die Bewegung des Ausstoßtors (11) in die Ballenausstoßposition (Fig. 4) mindestens zeitweise automatisch verhindert wird.

## Revendications

1. Ensemble de formation de balle (1) comprenant
un dispositif de formation de balle (9),
un compartiment (11, 15) avec une trappe de décharge mobile (11) et une autre partie de compartiment (15), et
un dispositif de fourniture de bande (20),
dans lequel la trappe de décharge mobile (11) peut être déplacée par rapport à l'autre partie de compartiment (15) entre
une position de formation de balle (figure 1),
au moins une position d'emballage de balle (figure 2, figure 3), et
une position d'éjection de balle (figure 4),
dans lequel un jeu ou un jeu respectif (N) entre l'autre partie de compartiment (15) et la trappe de décharge (11) placée dans la ou une position d'emballage de balle (figure 2, figure 3) se forme,
dans lequel une ouverture entre l'autre partie de compartiment (15) et la trappe de décharge (11) placée dans la position d'éjection de balle (figure 4) se forme,
dans lequel l'ouverture est plus grande que le jeu ou chaque jeu (N),
dans lequel le dispositif de formation de balle (9) est agencé afin de former une balle (B) à l'intérieur du compartiment (11, 15) alors que la trappe de décharge (11) est dans la position de formation de balle,
dans lequel le dispositif de fourniture de bande (20) est agencé afin de délivrer une bande de matériau d'emballage,
dans lequel l'ensemble de formation de balle (1) est agencé afin d'emballer une surface de la balle (B) à l'intérieur du compartiment (11, 15) dans la bande délivrée lorsque la trappe de décharge (11) est dans la ou une position d'emballage de balle (figure 2, figure 3), et
dans lequel l'ensemble de formation de balle (1) est agencé afin d'éjecter la balle emballée (B) à travers l'ouverture du compartiment (11, 15) lorsque la trappe de décharge (11) est dans la position d'éjection de balle (figure 4),
**caractérisé en ce que**
l'ensemble de formation de balle (1) comprend, en outre, un capteur de détection de bande (99) agencé afin de détecter si la bande délivrée est ou non présente sur la surface de la balle (B) à l'intérieur du compartiment (11, 15),
dans lequel le capteur de détection de bande (99) est agencé,
afin de détecter au moins un segment de la surface de balle à emballer,
dans lequel le ou chaque segment de surface détecté est visible à travers le jeu (N), et
afin de produire une alerte si la non présence de bande sur le ou un segment de surface détecté est détectée.

2. Ensemble de formation de balle selon la revendication 1,
**caractérisé en ce que**
l'ensemble de formation de balle (1) est agencé afin d'inhiber de manière automatique le mouvement de la trappe de décharge (11) dans la position d'éjection de balle (figure 4) si le capteur de détection de bande (99) a produit une alerte du fait de la détection de la non présence de bande sur le ou un segment de surface détecté.

3. Ensemble de formation de balle selon l'une des revendications précédentes,
**caractérisé en ce que**
l'ensemble de formation de balle (1) est agencé afin de faire pivoter la trappe de décharge (11)
à partir de la ou d'une position d'emballage de balle (figure 2, figure 3) vers la position d'éjection de balle (figure 4)
uniquement si le capteur de détection de bande (99) a détecté de manière positive la présence de la bande sur le ou chaque segment de surface de balle détecté.

4. Ensemble de formation de balle selon l'une des revendications précédentes,
**caractérisé en ce que**
l'ensemble de formation de balle (1) comprend, en outre, une source d'éclairement qui est agencée afin d'éclairer le ou chaque segment de surface de balle détecté à travers le jeu (N) formé.

5. Ensemble de formation selon l'une des revendications précédentes,
**caractérisé en ce que**
le jeu (N) est formé le long d'un axe de jeu et
le capteur de détection de bande (99) comprend une rangée de cellules de détection qui sont positionnées successivement parallèlement à l'axe de jeu,
dans lequel chaque cellule de détection est agencée afin de détecter si une partie du ou de chaque segment de surface de balle est ou non emballée
dans lequel les parties de segment
sont visible à travers le jeu (N) et
sont positionnées successivement parallèlement à l'axe de jeu sur la surface de balle à emballer.

6. Ensemble de formation selon l'une des revendications précédentes,
**caractérisé en ce que**
l'ensemble de formation de balle (1) est agencé afin de déplacer la balle (B) par rapport au compartiment (11, 15) et ainsi, par rapport au jeu (N)
au moins pendant que la trappe de décharge (11) est dans la ou une position d'emballage de balle et la surface de balle est emballée,
dans lequel le capteur de détection de bande (99) est agencé afin de détecter consécutivement à travers le jeu (N) différents segments visibles de la surface de balle à emballer.

7. Ensemble de formation de balle selon l'une des revendications précédentes,
**caractérisé en ce que**
la trappe de décharge (11) peut être déplacée entre
la position de formation de balle (figure 1),
une autre position d'emballage de balle (figure 2),
la position d'emballage de balle (figure 3), et
la position d'éjection de balle (figure 4),
dans lequel un autre jeu entre l'autre partie de compartiment (15) et la trappe de décharge (11) placée dans l'autre position d'emballage (figure 2) se forme et
dans lequel l'autre jeu est inférieur au jeu (N) se formant lorsque la trappe de décharge (11) est dans la position d'emballage de balle.

8. Ensemble de formation de balle selon l'une des revendications précédentes,
**caractérisé en ce que**
l'ensemble de formation de balle (1)
comporte une chambre d'emballage (Ch') à l'intérieur du compartiment (11, 15) et
est agencé afin d'emballer, dans la chambre d'emballage (Ch'), la surface de la balle (B), dans lequel le capteur de détection de bande (99) est agencé de manière à détecter au moins un segment de la surface à emballer de la balle (B) dans la chambre d'emballage (Ch')
à travers le jeu (N) entre l'autre partie de compartiment (15) et la trappe de décharge (11) et
à travers un jeu correspondant de la chambre d'emballage (Ch').

9. Ensemble de formation de balle selon la revendication 8,
**caractérisé en ce que**
l'ensemble de formation de balle (1)
comporte une autre chambre (Ch) à l'intérieur du compartiment (11, 15),
est agencé afin de former la balle (B) avec la surface à emballer dans l'autre chambre (Ch),
est agencé afin de déplacer la balle (B) dans la chambre (Ch'), et
est agencé afin d'injecter une matière lâche dans l'autre chambre (Ch) pendant l'emballage de la surface de la balle (B) dans la chambre d'emballage (Ch').

10. Procédé de formation d'au moins une balle (B) en utilisant un ensemble de formation de balle (1) comprenant
un dispositif de formation de balle (9),
un compartiment (11, 15) avec une trappe de décharge mobile (11) et une autre partie de compartiment (15), et
un dispositif de fourniture de bande (20),
dans lequel le procédé comprend les étapes dans lesquelles
le dispositif de formation de balle (9) forme la balle (B) à l'intérieur du compartiment (11, 15) pendant que la trappe de décharge (11) est dans une position de formation de balle,
le dispositif de fourniture de bande (20) délivre une bande de matériau d'emballage,
la trappe de décharge (11) est déplacée par rapport à l'autre partie de compartiment (15) dans une position d'emballage de balle (figure 2, figure 3) de telle sorte qu'un jeu (N) entre l'autre partie de compartiment (15) et la trappe de décharge (11) se forme,
une surface de la balle (B) est emballée pendant que la balle (B) est à l'intérieur du compartiment (11, 15) et pendant que la trappe de décharge (11) est dans la position d'emballage de balle (figure 2, figure 3),
la trappe de décharge (11) est déplacée par rapport à l'autre partie de compartiment (15) dans une position d'éjection de balle de telle sorte qu'une ouverture entre l'autre partie de compartiment (15) et la trappe de décharge (11) se forme
dans lequel l'ouverture est plus grande que le jeu (N), et
la balle emballée (B) est éjectée à travers l'ouverture, hors du compartiment (11, 15) pendant que la trappe de décharge (11) est dans la position d'éjection de balle (figure 4), **caractérisé en ce que**
l'ensemble de formation de balle (1) comprend, en outre, un capteur de détection de bande (99),
dans lequel l'étape dans laquelle la surface de la balle (B) est emballée comprend les étapes dans lesquelles
le capteur de détection de bande (99) détecte au moins un segment de la surface de balle à emballer,
dans lequel le ou chaque segment de surface détecté est visible à travers le jeu (N),
le capteur de détection de bande (99) détecte si la bande délivrée est ou non présente sur le ou chaque segment de surface détecté, et
une alerte est produite si le capteur de détection de bande (99) détecte la non présence de bande sur le ou au moins un segment de surface détecté.

11. Procédé de formation de balle selon la revendication 10,
**caractérisé en ce que**
l'étape dans laquelle une alerte est produite déclenche l'événement tel que le déplacement de la trappe de décharge (11) dans la position d'éjection de balle (figure 4) est inhibé au moins temporairement de manière automatique.
